(19) **Europäisches Patentamt / European Patent Office / Office européen des brevets**

(11) **EP 1 524 803 B1**

(12) **EUROPÄISCHE PATENTSCHRIFT**

(45) Veröffentlichungstag und Bekanntmachung des Hinweises auf die Patenterteilung:
**13.02.2008 Patentblatt 2008/07**

(51) Int Cl.:
**H04L 12/40** *(2006.01)*

(21) Anmeldenummer: **04015719.0**

(22) Anmeldetag: **03.07.2004**

(54) **Verfahren und Vorrichtung zur Umstellung eines ersten Modus einer Steuereinrichtung in einen zweiten Modus über einen Daten-Bus**

Method and apparatus to change a first mode of a controller to a second mode through a data-bus

Procédé et appareil pour modifier un premier mode d'un régulateur pour un second mode à l'aide d'un bus de données

(84) Benannte Vertragsstaaten:
**DE FR GB IT**

(30) Priorität: **16.10.2003 DE 10348255**

(43) Veröffentlichungstag der Anmeldung:
**20.04.2005 Patentblatt 2005/16**

(73) Patentinhaber: **ROBERT BOSCH GMBH**
**70442 Stuttgart (DE)**

(72) Erfinder:
• **Wackerl, Oliver**
**73230 Kirchheim an der Teck (DE)**
• **Jordan, Ruediger**
**70435 Stuttgart (DE)**

(56) Entgegenhaltungen:
**EP-A- 0 903 271**   **DE-A- 19 540 671**
**US-A- 5 555 498**

**Beschreibung**

STAND DER TECHNIK

Die vorliegende Erfindung betrifft ein Verfahren und eine Vorrichtung zur Umstellung eines Modus einer Steuereinrichtung über einen Daten-Bus, und insbesondere ein Verfahren und eine Vorrichtung zur Umstellung eines Standard-Betriebsmodus in einen Werks-Testmodus eines Kfz-Steuergerätes über einen CAN-Bus.

Steuergeräte, welche beispielsweise Mikro-Controller aufweisen, sind begleitend dem Herstellungsprozeß und nach Abschluß des Herstellungsprozesses beim Hersteller auf ihre Funktionalität zu prüfen. Dazu sind im Steuergerät spezielle Software-Funktionen vorzusehen, welche nur allein für die Prüfung des Geräts beim Hersteller eingesetzt und im späteren Betrieb beim Kunden nicht mehr benötigt werden. Solche Funktionen bzw. Testfunktionen dürfen im späteren Steuergerät-Betrieb nicht ausführbar sein, da ansonsten ein unerwünschtes Verhalten des Steuergerätes hervorgerufen werden könnte. In einem Kraftfahrzeug würde dies im Normalbetrieb beispielsweise ein nicht tragbares Sicherheitsrisiko mit sich bringen, wenn Steuergeräte insbesondere sicherheitsrelevanter Komponenten, wie dem Antriebssystem oder dem Bremssystem, Hersteller-Testfunktionen ausführen würden.

Im allgemeinen wird aufgrund dessen ein spezieller Test- bzw. Werksmodus definiert, welcher nur nach Erfüllung einer sogenannten Einsprungsbedingung ausgeführt wird. Bei Motorsteuergeräten ist es bekannt, eine solche Einsprungsbedingung zu erzeugen, indem an Eingangs-Pins bzw. -Anschlüssen zur Anbindung von Sensoren vorbestimmte Signale eingespeist werden. Dabei handelt es sich um Signale, welche im normalen Fahrbetrieb des Motors nicht vorkommen können. Auf diese Weise wird sichergestellt, daß nicht ein versehentliches Springen in den Testmodus auftreten kann.

Von Nachteil bei einer solchen Lösung ist, daß neben den Kommunikationsleitungen, wie z.B. CAN-Leitungen oder K-Leitungen, zusätzliche Anschluß-Pins, wie beispielsweise Sensoranschlüsse, erforderlich sind, an welche die Signale zur Bereitstellung der Einsprungsbedingung angelegt werden können. Steuergeräte, welche jedoch lediglich eine Versorgungsspannungs- und Daten-BUS-Anbindung aufweisen, bieten jedoch keine zusätzlichen Steuergeräte-Pins, über welche Signale zur Übermittlung einer Einsprungsbedingung an das beim Hersteller zu testende Steuergerät angelegt werden können.

Daneben zeigt die US 5,555,498 ein Verfahren und eine Vorrichtung zur Modusumstellung bei einem Steuergerät über einen Datenbus. Dabei wird zum Einsatz eines Diagnosegerätes in einen Programmiermodus umgeschaltet indem ein Steuersignal übertragen wird, welches eine überhöhte Spannung gegenüber der Signalübertragungsstruktur eines Fahrzeugs aufweist. Damit können eine Vielzahl unterschiedlichster Bus-Protokolle abgedeckt werden. Allerdings ist die Gefahr im Normalbetrieb durch überhöhte Spannung auf dem Bus in den Programmiermodus zu geraten ebenfalls gegeben.

Weiterhin zeigt die EP 0 903 271 A2 eine Sicherheitsvorrichtung, bei welcher ein Seed & Key Verfahren verwendet wird. Darin wird durch eine erste Einheit und eine zweite Einheit eine Anfangszahl (Seed) kodiert. Daraus ergeben sich somit ein erster Berechtigungsschlüssel (Key1) und ein zweiter Schlüssel (Key2), eben ein Schlüssel pro Einheit. Eine Freigabe des Fahrzeugs erfolgt nur wenn beide Schlüssel übereinstimmen.

Die DE 195 40 671 schließlich zeigt die Verwendung eines CAN Bussystems als Datenbus bei einer Ferndiagnosevorrichtung und einem entsprechenden Verfahren für Spannungversorgungseinrichtungen eines elektronischen Gerätes.

So ergibt sich die Aufgabe die Probleme des Standes der Technik zu beseitigen und speziell ein Verfahren und eine Vorrichtung anzugeben, die einfach und sicher eine Umstellung bei einem Steuergerät von einem Modus in einen anderen via vorgegebenem Daten-Bus, insbesondere CAN Bus, ermöglichen.

VORTEILE DER ERFINDUNG

Das erfindungsgemäße Verfahren zur Umstellung eines Modus einer Steuereinrichtung über einen Daten-Bus mit den Merkmalen des Anspruchs 1 sowie die Vorrichtung zur Umstellung eines Modus einer Steuereinrichtung über einen Daten-Bus mit den Merkmalen des Anspruchs 11 weist gegenüber dem bekannten Lösungsansatz den Vorteil auf, daß neben der Daten-Bus-Kommunikationsanbindung keine zusätzlichen Steuergeräte-Pins erforderlich sind, und daß auf kostengünstige Weise eine sichere Einsprungsbedingung erzeugt werden kann. Der Schutz vor einer zufällig auftretenden Einsprungsbedingung ist aufgrund vorbestimmter Eigenschaften der Einsprungsbedingung sehr hoch. Darüber hinaus besteht die Möglichkeit, als Schutz gegen Mißbrauch ein Authentisierungsverfahren, wie beispielsweise das Seed & Key-Verfahren, einzusetzen, um einen Tester bzw. eine Testeinrichtung des Herstellers zur Überprüfung und/oder Programmierung des Steuergeräts zu autorisieren. Somit liegt ein zweistufiges Sicherheitskonzept vor, welches sowohl auf Software-Algorithmen als auch auf physikalischen Größen beruht.

Die der vorliegenden Erfindung zugrunde liegende Idee besteht im wesentlichen darin, daß auf dem Daten-Bus, vorzugsweise einem CAN-Bus, als Einsprungsbedingung ein Signal angelegt wird, welches nach der entsprechenden Daten-Bus-Spezifikation keine gültigen Botschaften wiedergibt. Die Signale, welche die Einsprungsbedingung erfüllen, sind so gewählt, daß sie in einem entsprechenden Daten-Bus-Netzwerk gemäß Spezifikation gar nicht vorkommen können. Zusätzlich ist das Signal, welches die Einsprungsbedingung erfüllt, derart gestaltet, daß alle weiteren Steuergeräte, z.B.

in einem Fahrzeug, bei Auftreten des Signals in einen Fehler-Modus versetzt werden und sich vom sie verbindenden Daten-Bus trennen. Auf diese Weise ist gewährleistet, daß in einem normalen Betrieb des Steuergeräts, welches mit weiteren Steuergeräten über einen Daten-Bus verbunden ist, die Einsprungsbedingung, d.h. das vorbestimmte Signal, nicht auftreten kann.

Mit anderen Worten wird ein Verfahren zur Umstellung eines ersten Modus einer Steuereinrichtung in einen zweiten Modus über einen Daten-Bus mit den Schritten bereitgestellt: Aktivieren der Steuereinrichtung; Erfassen eines Signals auf dem Daten-Bus durch die Steuereinrichtung; Generieren eines vorbestimmten Signals auf dem Daten-Bus, welches eine vorbestimmte Frequenz und ein vorbestimmtes Tastverhältnis aufweist; und Umstellen des ersten Modus der Steuereinrichtung in einen vorbestimmten zweiten Modus der Steuereinrichtung bei Erfassen des vorbestimmten Signals durch die Steuereinrichtung.

In den Unteransprüchen finden sich vorteilhafte Weiterbildungen und Ausgestaltungen des im Anspruch 1 angegebenen Verfahrens und der im Anspruch 9 angegebenen Vorrichtung zur Umstellung eines ersten Modus einer Steuereinrichtung in einen zweiten Modus über einen Daten-Bus.

Gemäß einer bevorzugten Weiterbildung erfolgt die Umstellung nach der Erfassung des vorbestimmten Signals durch die Steuereinrichtung während einer Initialisierungsphase der Steuereinrichtung, vorzugsweise binnen einer Sekunde, wobei die Steuereinrichtung nach deren Aktivierung vorzugsweise einen Selbsttest durchführt. Auf diese Weise wird vorteilhaft sichergestellt, daß die Umstellung in den vorbestimmten zweiten Modus zeitnah nach der Erfassung des vorbestimmten Signals als Einsprungsbedingung erfolgt, und darüber hinaus die Steuereinrichtung bereits auf ihre grundsätzliche Funktion hin überprüft ist.

Gemäß einer weiteren bevorzugten Weiterbildung ist der vorbestimmte zweite Modus ein Testmodus zur Überprüfung und/oder zur Programmierung der Steuereinrichtung, wobei nach Umstellung in den vorbestimmten zweiten Modus ein Zugriffsschutz vorgesehen ist, um vorbestimmte Parameter der Steuereinrichtung umprogrammieren zu können, welche vorzugsweise auf einem programmierbaren Speicher, z.B. auf einem EEPROM, abgespeichert sind. Dies birgt den Vorteil der Programmierbarkeit der Steuereinrichtung nach Passieren einer Sicherheitsschranke, welche vor unerlaubtem Zugriff auf vorbestimmte Steuergerät-Parameter schützt.

Gemäß einer weiteren bevorzugten Weiterbildung erfolgt der Zugriffsschutz über das Seed & Key-Authentisierungsverfahren. Dieses Verfahren sieht einen hohen Schutz-Level für die Autorisation von Zugriffen auf Kernfunktionen des Steuergeräts vor.

Gemäß einer weiteren bevorzugten Weiterbildung wird das vorbestimmte Signal durch andere Steuereinrichtungen, welche ebenfalls am Daten-Bus angekoppelt und aktiviert sind, verändert, wodurch es von der Steuereinrichtung nicht erfaßt werden kann, demzufolge eine Umstellung in den vorbestimmten zweiten Modus ausbleibt. Somit wird vorteilhaft sichergestellt, daß eine Umstellung in den vorbestimmten zweiten Modus nur erfolgen kann, wenn am Daten-Bus kein anderes Steuergerät außer dem zu testenden bzw. zu überprüfenden Steuergerät angekoppelt ist.

Gemäß einer weiteren bevorzugten Weiterbildung wird über einen CAN-Bus als Daten-Bus kommuniziert. Der CAN-Bus findet in der Automobil-Industrie eine weite Verbreitung und zeichnet sich durch für dieses Einsatzgebiet geeignete Spezifikation aus.

Gemäß einer weiteren bevorzugten Weiterbildung wird auf den vorbestimmten zweiten Modus umgestellt, wenn eine vorbestimmte Anzahl von Taktperioden des vorbestimmten Signals, vorzugsweise mindestens 16 Taktperioden, insbesondere mindestens 32 Taktperioden, erfaßt werden. Durch diese Maßnahme wird eine zusätzliche Sicherheitsschranke vorgegeben, um ein ungewolltes Springen in den vorbestimmten zweiten Modus zu unterbinden.

Gemäß einer weiteren bevorzugten Weiterbildung wird das vorbestimmte Signal zur Umstellung der Steuereinrichtung von einer Testeinrichtung für eine vorbestimmte Zeit an den Daten-Bus angelegt, bis das vorbestimmte Signal durch die Steuereinrichtung erfaßt wird, wobei die Steuereinrichtung vorzugsweise gleichzeitig mit Anlegen des vorbestimmten Signals über eine Schalteinrichtung aktiviert wird. Dies birgt den Vorteil einer zusätzlichen Sicherheitsmaßnahme, wobei die Steuereinrichtung nach deren Aktivierung nur eine entsprechende vorbestimmte Zeit empfänglich für das vorbestimmte Signal ist.

Gemäß einer weiteren bevorzugten Weiterbildung weist die umzustellende Steuereinrichtung einen Versorgungsspannungs-Anschluß, einen Bezugspotential-Anschluß, einen CAN-Bus-High-Anschluß und einen CAN-Bus-Low-Anschluß auf und bildet vorzugsweise ein Kraftfahrzeug-Steuergerät. Auf diese Weise wird der vorteilhafte Einsatz in einem Kraftfahrzeug, insbesondere in einem Pkw, mit einer minimalen Anschlußkonfiguration bereitgestellt.

ZEICHNUNGEN

Ausführungsbeispiele der Erfindung sind in den Zeichnungen dargestellt und in der nachfolgenden Beschreibung näher erläutert.

Es zeigen:

Fig. 1 ein schematisches Blockschaltbild einer Testvorrichtung zur Erläuterung einer Ausführungsform der vorliegenden Erfindung; und

Fig. 2 ein schematisches Ablaufdiagramm zur Erläuterung der Funktionsweise einer Ausführungsform der vorliegenden Erfindung.

BESCHREIBUNG DER AUSFÜHRUNGSBEISPIELE

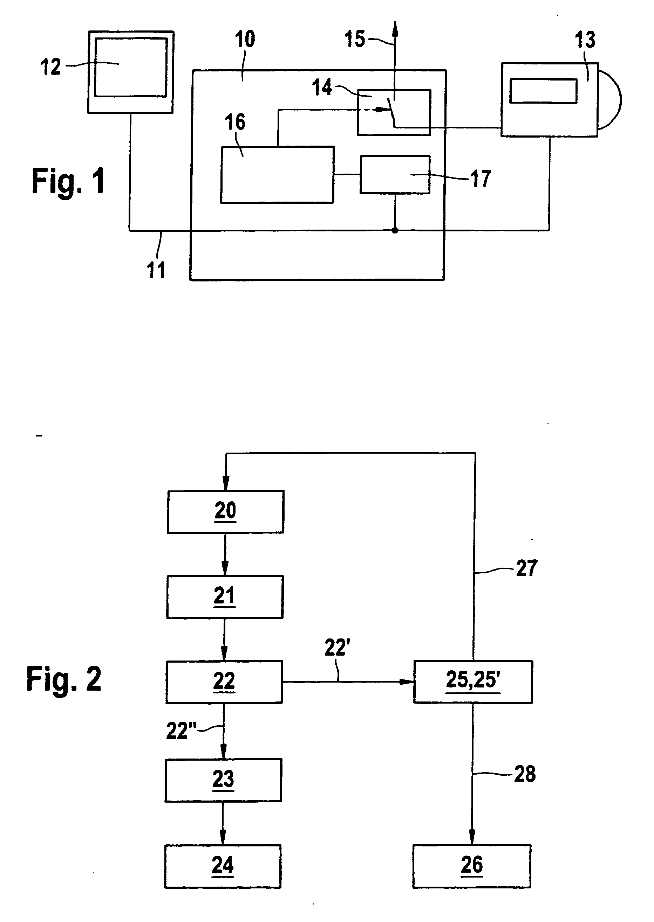

In Fig. 1 ist eine Testeinrichtung 10 vorgesehen, welche über einen Daten-Bus 11, vorzugsweise einen CAN-Bus, mit einer Datenverarbeitungseinrichtung 12, insbesondere einem PC, verbunden ist. Die Testeinrichtung 10 ist darüber hinaus über den Daten-Bus 11 mit einer Steuereinrichtung 13, vorzugsweise einem Kfz-Steuergerät, verbunden, welches mittels der Testeinrichtung 10 und der Datenverarbeitungseinrichtung 12 getestet werden kann. Die Testeinrichtung 10 weist eine Schalteinrichtung 14, vorzugsweise einen Bipolartransistor, auf, über welche die Steuereinrichtung 13 mit einer Versorgungsspannung 15, z.B. 14,5 V, verbunden werden kann. Die Schalteinrichtung 14 ist an eine weitere Steuereinrichtung 16, vorzugsweise einen Mikro-Controller, gekoppelt. Der Mikro-Controller 16 ist mit einer Daten-Bus-Treibereinrichtung 17, vorzugsweise ein CAN-Treiber, verbunden, welche an den Daten-Bus 11 gekoppelt ist.

Um die Steuereinrichtung 13, beispielsweise eine Sensor-Steuereinheit (SCU), von einem ersten Modus, beispielsweise einem Standardbetriebs-Modus, in einen vorbestimmten zweiten Modus, wie vorzugsweise einen Hersteller-Testmodus, zu versetzen muß eine Einsprungsbedingung erfüllt werden. Diese Einsprungsbedingung wird in Form eines vorbestimmten Signals, welches eine vorbestimmte Frequenz und ein vorbestimmtes Tastverhältnis aufweist, in der Testeinrichtung 10 generiert. Als Einsprungsbedingung wird das vorbestimmte Signal auf den Daten-Bus 11 gelegt, welches von der Steuereinrichtung 13 nach deren Aktivierung durch die Schalteinrichtung 14 detektiert wird. Wird das vorbestimmte Signal als Einsprungsbedingung erkannt bzw. von der Steuereinrichtung 13 erfaßt, so geht die Steuereinrichtung 13 in den vorbestimmten Modus, d.h. vorzugsweise den Hersteller-Testmodus. Andernfalls wird ein Standard-Betriebsmodus von der aktivierten Steuereinrichtung 13 ausgeführt.

Der Einsprung in den vorbestimmten Modus darf nur beim Hersteller, und keinesfalls im Standard-Betrieb, wie beispielsweise dem Fahrbetrieb eines Fahrzeugs, möglich sein. Da der Daten-Bus 11 als Schnittstelle sowohl für die Kommunikation mit anderen Komponenten bzw. Steuergeräten im Standard-Betrieb, beispielsweise in einem Auto, als auch bei einem Hersteller-Test Verwendung findet, ist zu gewährleisten, daß die Einsprungsbedingung, d.h. das vorbestimmte Signal, im normalen Daten-Bus-Betrieb nicht auftreten kann. Dies wird vorzugsweise dadurch erreicht, daß die Frequenz bzw. das Tastverhältnis, d.h. das Verhältnis von High- zu Low-Zeit (duty-cycle), des vorbestimmten Signals, welches die Einsprungsbedingung erfüllt, gegen die Spezifikationen des Daten-Busses 11, vorzugsweise gegen die CAN-Spezifikationen, verstößt.

Gemäß der Ausführungsform in Fig. 1 wird das vorbestimmte Signal mit Hilfe eines Mikro-Controllers 16 erzeugt. Um die Steuereinrichtung 13 in den vorbestimmten Modus umzustellen, wird das vorbestimmte Signal als Einsprungsbedingung während dem Initialisierungs- bzw. Boot-Vorgang an den Daten-Bus 11, und folglich an das Steuergerät 13 angelegt. In der Grundstellung ist die Schalteinrichtung 14 geöffnet und eine Verbindung zur Spannungsversorgung 15 besteht nicht. In diesem Zustand wird das vorbestimmte Signal nicht durch die Mikro-Controller-Schaltung 16, 17 auf den Daten-Bus 11 gelegt.

Mittels einer vorbestimmten Applikation wird von der Datenverarbeitungseinrichtung 12 ein Start-Befehl an die Testeinrichtung 10 gesendet. Daraufhin legt die Testeinrichtung 10 das vorbestimmte Signal, welches die Einsprungsbedingung erfüllt, auf den Daten-Bus 11 und schaltet, vorzugsweise gleichzeitig, die Spannungsversorgung 15 über die Schalteinrichtung 14 für die Steuereinrichtung 13 als Prüfling ein. Nach einer vorbestimmten Zeit, beispielsweise 2 Sekunden, wird das vorbestimmte Signal gestoppt und nicht weiter von der Testeinrichtung 10 auf den Daten-Bus 11 aufgebracht. Somit durchläuft das Steuergerät 13 eine Initialisierungsphase, d.h. der Prüfling bootet, erkennt das vorbestimmte Signal als erfüllte Einsprungsbedingung und springt, vorzugsweise nach einer erfolgreichen Authentifizierung, z.B. über ein Seed & Key-Verfahren, in den vorbestimmten Modus, wie beispielsweise einen Hersteller-Testmodus. Auf der Datenverarbeitungseinrichtung 12 wird die Hersteller-Test-Software ausgeführt, und über den Daten-Bus 11 wird mit der Steuereinrichtung 13 kommuniziert.

Bei der bevorzugt eingesetzten CAN-Kommunikation über einen CAN-Bus 11 kommt das sogenannte Bit-Stuffing zum Einsatz. Dies bedeutet, daß spätestens nach 5 gleichwertigen Bits ein negiertes Bit eingefügt wird, um die Synchronisation der verschiedenen Teilnehmer an einem Daten-Bus sicherzustellen. Ein ERROR-Frame weist 6 dominante Bits mit einem Low-Pegel, d.h. einer binären Null, auf, welches gegen die Bit-Stuffing-Regel verstößt. Die maximale Anzahl von dominanten Bits auf dem Daten-Bus tritt auf, wenn ein Bus-Teilnehmer einen lokalen Fehler erkennt und mit einem ERROR-Frame, welcher 6 dominante Bits aufweist, antwortet. Gesetzt den Fall, daß andere Bus-Teilnehmer den Fehler nicht direkt erkennen, reagieren diese mit einem weiteren ERROR-Frame. Somit ergibt sich eine maximale Anzahl von 12 dominanten Bits, welche laut CAN-Spezifikation möglich sind.

Der CAN-Spezifikation folgend, sind auf die dominanten Bits des ERROR-Frames im allgemeinen 11, jedoch zumindest 8 rezessive Bits im Falle eines Overload-Frames auf dem CAN-Bus vorgesehen. Daraus ergeben sich folgende Bedingungen, um die CAN-Spezifikation zu verletzen, welches eine Möglichkeit für eine erfindungsgemäße Einsprungsbedingung darstellt:

$$t_{Low} > 12 \cdot t_{Bit}$$

$$t_{High} < 8 \cdot t_{Bit},$$

wobei $t_{Bit}$ = 1/(Baud-Rate) ist. Die Baud-Rate ist eine herstellerspezifische Größe. Da bei gewissen Steuergeräten jedoch zeitkritische Daten eines vorbestimmten Umfangs zu übertragen sind, wird im vorliegenden Ausführungsbeispiel davon ausgegangen, daß eine Datenrate von weniger als 125 kbps nicht realisierbar ist. Dies ist beispielsweise der Fall, wenn es sich bei der Steuereinrichtung um ein Abstandsradarsteuergerät für ein Kraftfahrzeug handelt, also zeitkritische Daten involviert sind. Hält man einen Abstand von einer Größenordnung zu der minimalen Datenrate von beispielsweise 125 kbps, wählt man also eine minimale Baud-Rate von z.B. 10 kbps (worst bzw. slowest case-Szenarium), ist somit ein großer Sicherheitsabstand gewährleistet. Daraus folgt:

$$t_{Low} > 12 \cdot 1 \: / \: 10000 \text{ bps} \doteq 1,2 \text{ ms}$$

$$t_{High} < 8 \cdot 1 \: / \: 10000 \text{ bps} = 0,8 \text{ ms}.$$

Ein Signal dieser Frequenz ist auf einem CAN-Bus mit einer Baud-Rate von mindestens 10 kbps nicht realisierbar. Ein solches vorbestimmtes Signal auf dem CAN-Bus führt dazu, daß weitere, d.h. nicht zu testende, Bus-Teilnehmer bzw. Steuereinrichtungen nach maximal 16 Perioden bei 10 kbps in einen ERROR-PASSIV- bzw. BUS-OFF-Zustand wechseln. Somit erfolgt eine Selbstverriegelung, da das vorbestimmte Signal mit entsprechenden Charakteristika, wie oben beschrieben, nur auf dem CAN-Bus liegen kann, wenn allein die zu testende Steuereinrichtung 13 an dem Daten-Bus 11 liegt.

Bei Baud-Raten zwischen 2 kbps und 10 kbps sind theoretisch Bit-Folgen denkbar, welche dem vorbestimmten Signal kurzzeitig entsprechen und nicht gegen die CAN-Spezifikation verstoßen. Durch ein vorzugsweise ausgeführtes Erhöhen der zu erkennenden bzw. zu erfassenden Taktperioden auf mehr als 32 Taktperioden kann ein zufälliges Auftreten des vorbestimmten Signals, d.h. ein zufälliges Auftreten eines Signals, welches die Einsprungsbedingung erfüllt, vollständig ausgeschlossen werden. In diesem Fall wird durch ein (EOF + IFS)-Feld des Datentelegramms spätestens die 33. Periode verformt und somit die Einsprungsbedingung als nicht gültig erkannt werden.

Gemäß dem Ausführungsbeispiel muß das vorbestimmte Signal mit der vorbestimmten Frequenz und dem vorbestimmten Tastverhältnis ab dem Einschalten der Versorgungsspannung 15 an die Steuereinrichtung 13 anliegen. Das vorbestimmte Signal muß dann mindestens so lange anliegen, bis die Steuereinrichtung 13 nach deren Initialisierung und vorzugsweise nach einem Selbsttest der Steuereinrichtung 13 z.B. 16 Taktperioden, vorzugsweise 32 Taktperioden, des vorbestimmten Signals erkannt hat. Sobald eine falsche bzw. fehlende Signalflanke bei der Erfassung des vorbestimmten Signals auftritt, wird ein Standard-Betriebsmodus initiiert und nicht in den vorbestimmten Modus (Hersteller-Testmodus) umgewechselt.

Sobald das vorbestimmte Signal als gültige Einsprungsbedingung von der Steuereinrichtung 13 erkannt wird, erwartet die Steuereinrichtung 13, daß die Kommunikation mit der Datenverarbeitungseinrichtung 12 aufgebaut wird. Gemäß dieser Ausführungsform muß dies innerhalb einer definierten Zeit durch eine vorbestimmte Botschaft auf dem CAN-Bus passieren. Falls eine andere Nachricht, ein TIME-OUT, d.h. ein Verstreichen der Zeit, oder ein ERROR-Frame identifiziert wird, wird der Einsprung in den vorbestimmten Modus verhindert und ein Reset ausgeführt. Im Anschluß bei einer aufgebauten Kommunikation zwischen der Steuereinrichtung 13 und der Datenverarbeitungseinrichtung 12 wird daraufhin ein Diagnose-Ablauf mit einem vorbestimmten Diagnose-Modus, z.B. "End of line system supplier mode" oder "System supplier specific" geöffnet.

Um Zugriff auf weitere geschützte Parameter und/oder eine Ladefunktionalität bedienen zu können, ist vorzugsweise ein Zugriffsschutz vorgesehen, welcher über einen Seed & Key-Prozeß bei erfolgreicher Absolvierung überwunden werden kann. Bei einem Seed & Key-Verfahren fordert die Datenverarbeitungseinrichtung 12 eine Zufallszahl an und gibt bei dieser Anforderung sowohl ein Passwort als auch eine Verschlüsselungs-Maskennummer an. Ist das Passwort und/oder die Verschlüsselungs-Maskennummer nicht gültig, wird der Authentisierungsprozeß abgebrochen. Sind Passwort und Verschlüsselungs-Maskennummer gültig, berechnet die Datenverarbeitungseinrichtung 12 aufgrund der Zufallszahl einen Schlüssel und sendet ihn an die Steuereinrichtung 13. Die Steuereinrichtung 13 vergleicht den empfangenen Schlüssel mit dem selbst generierten Schlüssel und bricht den Prozeß ab, falls die Schlüssel voneinander abweichen. Wenn beide Schlüssel identisch sind, wird ein Zugriff auf die Laderfunktionalität, d.h. die Konfiguration der Steuereinrichtung 13, z.B. über Parameter, welche auf einem EEPROM gespeichert sind, freigegeben.

Gemäß der vorliegenden Erfindung läßt sich eine Steuereinrichtung 13 vom authentifizierten Hersteller testen bzw. rekonfigurieren, wenn sie lediglich 4 Anschlüsse (Versorgungsspannung 15, Bezugspotential bzw. Masse (nicht dargestellt), einen CAN-High-Anschluß und einen CAN-Low-Anschluß) aufweist. Über diese 4 Anschluß-Pins kann ein vorbestimmtes Signal übermittelt werden, welches eine Einsprungsbedingung erfüllt, welche nicht nur auf einem Software-Algorithmus, sondern darüber hinaus auch auf physikalischen Größen (Frequenz, Tastverhältnis) beruht. Zusätzliche Bauteile in der Steuereinrichtung 13 werden nicht benötigt, da das vorbestimmte Signal auf einer Standard-Schnittstelle realisierbar ist.

Fig. 2 zeigt ein schematisches Ablaufdiagramm zur Erläuterung des Prozeßablaufes beim Verfahren gemäß einer Ausführungsform der vorliegenden Erfindung. Zunächst erfolgt das Aktivieren bzw. Einschalten 17 der Steuereinrichtung 13 gemäß Fig. 1. Damit ist eine Initialisierung verbunden. Auf die Initialisierung bzw. Aktivierung 20 der Steuereinrichtung erfolgt vorzugsweise ein Selbsttest 21 der Steuereinrichtung. Daran schließt sich die Detektion 22 des Daten-Busses 11 gemäß Fig. 1 an, ob das vorbestimmte Signal auf dem Daten-Bus 11 erkannt wird oder nicht. Wird das vorbestimmte Signal nicht erkannt 22", so erfolgt vorzugsweise ein Test der Standard-Betriebs-Software 23, welche dann auf der Steuereinrichtung 13 ausgeführt wird 24. Wird jedoch das vorbestimmte Signal von der Steuereinrichtung erkannt 22', so erfolgt der Zugriff auf vorbestimmte, nicht geschützte Informationen bzw. die Möglichkeit, gewisse Parameter zu ändern 25, wobei insbesondere ein Zugriffsschutz 25', vorzugsweise über das Seed & Key-Verfahren vorgesehen ist, um geschützte Parameter abändern zu können. Wird das Authentisierungsverfahren 25' erfolgreich durchlaufen 28, so wird der vorbestimmte Modus 26 aktiviert. Bei einer fehlerhaften Eingabe im Authentisierungsverfahren 25' erfolgt ein Software-Reset 27, welcher wieder in die Initialisierungsphase bzw. die Aktivierung 20 der Steuereinrichtung mündet.

Obwohl die vorliegende Erfindung vorstehend anhand bevorzugter Ausführungsbeispiele beschrieben wurde, ist sie darauf nicht beschränkt, sondern auf vielfältige Weise modifizierbar.

Trotz einer Fokussierung auf den CAN-Bus mit entsprechender Spezifikation sind weitere DatenBusse für die Ausführung des Verfahrens geeignet. Darüber hinaus sind genannte Baud-Raten, Frequenzen und Tastverhältnisse und entsprechende High- bzw. Low-Phasen von Signalen beispielhaft zu sehen. Auch die schematische Anordnung gemäß Fig. 1 stellt lediglich ein bevorzugtes vereinfachtes Ausführungsbeispiel der vorliegenden Erfindung dar.

**Patentansprüche**

1. Verfahren zur Umstellung eines ersten Modus einer Steuereinrichtung (13) in einen zweiten Modus über einen Daten-Bus (11) über welchen gemäß Daten-Bus Spezifikation gültige Botschaften übertragen werden, mit den Schritten:

   - Aktivieren (20) der Steuereinrichtung (13);
   - Generieren eines vorbestimmten Signals auf dem Daten-Bus (11);
   - Erfassen des vorbestimmten Signals auf dem Daten-Bus (11) durch die Steuereinrichtung(13)
   - und umstellen eines ersten Modus der Steuereinrichtung (13) in einen vorbestimmten zweiten Modus der Steuereinrichtung (13) bei Erfassen (22') des vorbestimmten Signals durch die Steuereinrichtung (13)

   **dadurch gekennzeichnet, dass** das vorbestimmte Signal auf dem Daten-Bus (11) eine derart vorbestimmte Frequenz und Tastverhältnis aufweist, dass das Signal keine gemäß Daten-Bus Spezifikation gültige Botschaft wiedergibt.

2. Verfahren nach Anspruch 1,
   **dadurch gekennzeichnet, dass**
   die Umstellung nach der Erfassung (22') des vorbestimmten Signals durch die Steuereinrichtung (13) während einer Initialisierungsphase (20, 21, 22) der Steuereinrichtung (13) erfolgt.

3. Verfahren nach Anspruch 1,
   **dadurch gekennzeichnet, dass**
   die Steuereinrichtung (13) nach deren Aktivierung einen Selbsttest (21) durchführt.

4. Verfahren nach Anspruch 1, 2 oder 3,
   **dadurch gekennzeichnet, dass**
   der vorbestimmte zweite Modus ein Testmodus zur Überprüfung (25) und/oder zur Programmierung (26) der Steuereinrichtung (13) ist, wobei nach Umstellung in den vorbestimmten zweiten Modus ein Zugriffsschutz (25') vorgesehen ist, um vorbestimmte Parameter der Steuereinrichtung (13) umprogrammieren zu können.

5. Verfahren nach Anspruch 4,
   **dadurch gekennzeichnet, dass**
   der Zugriffsschutz (25') über das Seed & Key-Authentisierungsverfahren erfolgt.

6. Verfahren nach einem der vorangehenden Ansprüchen,
   **dadurch gekennzeichnet, dass**
   das vorbestimmte Signal durch andere Steuereinrichtungen, welche ebenfalls am Daten-Bus (11) angekoppelt und aktiviert sind, verändert wird, wodurch es von der Steuereinrichtung (13) nicht erfasst werden kann und demzufolge eine Umstellung in den vorbestimmten zweiten Modus ausbleibt.

7. Verfahren nach einem der vorangehenden Ansprüchen,
   **dadurch gekennzeichnet, dass**
   über einen CAN-Bus als Daten-Bus (11) kommuniziert wird.

8. Verfahren nach einem der vorangehenden Ansprüchen,
   **dadurch gekennzeichnet, dass**
   auf den vorbestimmten zweiten Modus umgestellt wird, wenn eine vorbestimmte Anzahl von Taktperioden des vorbestimmten Signals, erfasst werden.

9. Verfahren nach einem der vorangehenden Ansprüchen,
**dadurch gekennzeichnet, dass**
das vorbestimmte Signal zur Umstellung der Steuereinrichtung (13) von einer Testeinrichtung (10) für eine vorbestimmte Zeit an den Daten-Bus (11) angelegt wird, bis das vorbestimmte Signal durch die Steuereinrichtung (13) erfasst wird.

10. Verfahren nach Anspruch 9,
**dadurch gekennzeichnet, dass**
die Steuereinrichtung (13) gleichzeitig mit Anlegen des vorbestimmten Signals über eine Schalteinrichtung (14) aktiviert wird.

11. Vorrichtung zur Umstellung eines ersten Modus einer Steuereinrichtung (13) in einen zweiten Modus über einen Daten-Bus (11) über welchen gemäß Daten-Bus Spezifikation gültige Botschaften übertragen werden mit:

einer Datenverarbeitungseinrichtung (12), verbunden mit dem Daten-Bus (11), zum Aktivieren einer Testeinrichtung (10) und zum Kommunizieren mit der Steuereinrichtung (13) über den Daten-Bus (11),
und mit einer Schalteinrichtung (14) zum Aktivieren der Steuereinrichtung (13) sowie mit einem Mikro-Controller (16), verbunden mit der Schalteinrichtung (14) und mit dem Daten-Bus (11), zum Ausgeben eines vorbestimmten Signals auf den Daten-Bus (11) zur Umstellung des ersten Modus der Steuereinrichtung (13) in einen vorbestimmten zweiten Modus der Steuereinrichtung (13) bei Erfassen (22') des vorbestimmten Signals auf dem Daten-Bus (11) durch die Steuereinrichtung (13)

**dadurch gekennzeichnet, dass** die Vorrichtung derart ausgestaltet ist, dass diese das vorbestimmte Signal auf dem Daten-Bus (11) mit einer derart vorbestimmten Frequenz und Tastverhältnis erzeugt, dass das Signal keine gemäß Daten-Bus Spezifikation gültige Botschaft wiedergibt.

12. Vorrichtung nach Anspruch 11,
**dadurch gekennzeichnet, dass**
die umzustellende Steuereinrichtung (13) einen Versorgungsspannungs-Anschluß (15), einen Bezugspotential-Anschluß, einen CAN-Bus-High-Anschluß und einen CAN-Bus-Low-Anschluß aufweist.

**Claims**

1. Method for changing over from a first mode of a control device (13) to a second mode via a data bus (11) by means of which valid messages are transmitted in accordance with a data bus specification, comprising the steps of:

- activating (20) the control device (13);
- generating a predetermined signal on the data bus (11);
- the control device (13) detecting the predetermined signal on the data bus (11)
- and changing over from a first mode of the control device (13) to a predetermined second mode of the control device (13) when the predetermined signal is detected (22') by the control device (13),

**characterized in that** the predetermined signal on the data bus (11) has a frequency and pulse-duty factor which are predetermined in such a way that the signal does not reflect a valid message in accordance with a data bus specification.

2. Method according to Claim 1, **characterized in that** the changeover is made after the detection (22') of the predetermined signal by the control device (13) during an initialization phase (20, 21, 22) of the control device (13).

3. Method according to Claim 1, **characterized in that** the control device (13) carries out a self-test (21) after it is activated.

4. Method according to Claim 1, 2 or 3, **characterized in that** the predetermined second mode is a test mode for checking (25) and/or for programming (26) the control device (13), with access protection (25') being provided after changeover to the predetermined second mode in order to be able to reprogram predetermined parameters of the control device (13).

5. Method according to Claim 4, **characterized in that** access protection (25') is performed by means of the seed & key authentication method.

6. Method according to one of the preceding claims, **characterized in that** the predetermined signal is changed by other control devices which are likewise coupled to the data bus (11) and activated, as a result of which the said signal cannot be detected by the control device (13) and accordingly a changeover to the predetermined second mode is not made.

7. Method according to one of the preceding claims, **characterized in that** communication is performed via a CAN bus as the data bus (11).

**8.** Method according to one of the preceding claims, **characterized in that** a changeover is made to the predetermined second mode when a predetermined number of clock periods of the predetermined signal are detected.

**9.** Method according to one of the preceding claims, **characterized in that** the predetermined signal for changing over the control device (13) from a test device (10) is applied to the data bus (11) for a predetermined time until the predetermined signal is detected by the control device (13).

**10.** Method according to Claim 9, **characterized in that** the control device (13) is activated via a switching device (14) at the same time as the predetermined signal is applied.

**11.** Apparatus for changing over from a first mode of a control device (13) to a second mode via a data bus (11) by means of which valid messages are transmitted in accordance with a data bus specification, comprising:

a data processing unit (12), which is connected to the data bus (11), for activating a test device (10) and for communicating with the control device (13) via the data bus (11), and comprising a switching device (14) for activating the control device (13) and comprising a microcontroller (16), which is connected to the switching device (14) and to the data bus (11), for outputting a predetermined signal to the data bus (11) for changing over from the first mode of the control device (13) to a predetermined second mode of the control device (13) when the predetermined signal on the data bus (11) is detected (22') by the control device (13),

**characterized in that** the apparatus is configured in such a way that it generates the predetermined signal on the data bus (11) at a frequency and pulse-duty factor which are predetermined in such a way that the signal does not reflect a valid message in accordance with a data bus specification.

**12.** Apparatus according to Claim 11, **characterized in that** the control device (13) to be changed over has a supply voltage connection (15), a reference potential connection, a CAN bus-high connection and a CAN bus-low connection.

**Revendications**

**1.** Procédé de commutation d'un premier mode d'une installation de commande (13) en un second mode par un bus de données (11) par lequel se transmettent des messages valables pour la spécification du bus de données, comprenant les étapes suivantes :

- activation (20) de l'installation de commande (13),
- génération d'un signal prédéfini sur le bus de données (11),
- saisie du signal prédéfini sur le bus de données (11) par l'installation de commande (13),
- et commutation d'un premier mode de l'installation de commande (13) vers un second mode prédéfini de l'installation de commande (13) lors de la saisie (22') du signal prédéfini par l'installation de commande (13),

**caractérisé par**
le signal prédéfini sur le bus de données (11) ou une fréquence et un rapport de travail prédéfinis de façon que le signal ne reproduise aucun message valable selon la spécification du bus de données.

**2.** Procédé selon la revendication 1,
**caractérisé en ce que**
la commutation après la saisie (22') du signal prédéfini est faite par l'installation de commande (13) pendant une phase d'initialisation (20, 21, 22) de l'installation de commande (13).

**3.** Procédé selon la revendication 1,
**caractérisé en ce qu'**
après activation, l'installation de commande (13) effectue un test automatique (21).

**4.** Procédé selon les revendications 1, 2 ou 3,
**caractérisé en ce que**
le second mode prédéfini est un mode de test pour contrôler (25) et/ou pour programmer (26) l'installation de commande (13) et après commutation dans le second mode prédéfini, il est prévu une protection d'accès (27') pour pouvoir reprogrammer des paramètres prédéfinis de l'installation de commande (13).

**5.** Procédé selon la revendication 4,
**caractérisé en ce que**
la protection d'accès (25') se fait par un procédé d'authentification Seed & Key.

**6.** Procédé selon l'une des revendications précédentes,
**caractérisé en ce que**
le signal prédéfini est modifié par d'autres installations de commande également couplées au bus de données (11) et activées, ce signal ne pouvant être saisi par l'installation de commande (13) n'entraînant pas de commutation sur le second mode prédéfini.

**7.** Procédé selon l'une des revendications précédentes,
**caractérisé en ce que**
le bus de données (11) par lequel on communique est un bus CAN.

**8.** Procédé selon l'une des revendications précédentes,
**caractérisé en ce qu'**
on commute sur le second mode prédéfini si un nombre prédéfini de périodes de cadence du signal prédéfini a été saisi.

**9.** Procédé selon l'une des revendications précédentes,
**caractérisé en ce que**
le signal prédéfini pour commuter l'installation de commande (13) est appliqué par une installation de test (10) pendant une durée prédéterminée au bus de données (11) jusqu'à la saisie du signal prédéfini par l'installation de commande (13).

**10.** Procédé selon la revendications 9,
**caractérisé en ce que**
l'installation de commande (13) est activée en même temps que le signal prédéfini est appliqué par une installation de commutation (14).

**11.** Dispositif de commutation d'un premier mode d'une installation de commande (13) dans un second mode par un bus de données (11) qui transmet des messages valables selon la spécification du bus de données, comprenant :

- une installation de traitement de données (12) reliée au bus de données (11) pour activer une installation de test (10) et pour communiquer avec l'installation de commande (13) par le bus de données (11),
- et une installation de commutation (14) pour activer l'installation de commande (13) ainsi qu'un microcontrôleur (16) relié à l'installation de commutation (14) et au bus de données (11) pour émettre un signal prédéfini dans le bus de données (11) pour commuter le premier mode de l'installation de commande (13) en un second mode prédéfini de l'installation de commande (13) à la saisie (22') du signal prédéfini sur le bus de données (11) par l'installation de commande (13),

**caractérisé en ce que**
le dispositif est conçu pour générer le signal prédéfini sur le bus de données (11) avec une fréquence et un rapport de travail prédéfinis de façon que le signal ne reproduise aucun message valable selon la spécification du bus de données.

**12.** Dispositif selon la revendication 11,
**caractérisé en ce que**
l'installation de commande (13) à commuter, présente un branchement de tension d'alimentation (15), un branchement potentiel de référence, un branchement haut de bus CAN et un branchement bas de bus CAN.

**Fig. 1**

**Fig. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5555498 A
- EP 0903271 A2
- DE 19540671